# EUROPEAN PATENT SPECIFICATION

(11) **EP 3 422 164 B1**
(45) Date of publication and mention of the grant of the patent: **23.03.2022**
(21) Application number: 16894905.5
(22) Date of filing: 25.03.2016
(51) Int. Cl.: G06F 3/023, G06F 1/16, G06F 3/0482

(54) **CHARACTER INPUT METHOD, APPARATUS, AND TERMINAL**
ZEICHENEINGABEVERFAHREN, -VORRICHTUNG UND -ENDGERÄT
PROCÉDÉ, APPAREIL ET TERMINAL D'ENTRÉE DE CARACTÈRES

(43) Date of publication of application: 02.01.2019
(73) Proprietor: Huawei Technologies Co., Ltd., Longgang District Shenzhen, Guangdong 518129 (CN)
(72) Inventor: WANG, Hao, Shenzhen Guangdong 518129 (CN); YANG, Yanchang, Shenzhen Guangdong 518129 (CN); GUO, Shuai, Shenzhen Guangdong 518129 (CN); DUAN, Hong, Shenzhen Guangdong 518129 (CN); HUANG, Zhiquan, Shenzhen Guangdong 518129 (CN); ZHU, Xiang, Shenzhen Guangdong 518129 (CN)
(74) Representative: Pfenning, Meinig & Partner mbB
(86) International application number: PCT/CN2016/077309
(87) International publication number: WO 2017/161550

(56) References cited:
- EP-A2- 0 930 760
- CN-A- 103 380 412
- CN-A- 105 183 174
- US-A1- 2008 084 417
- US-A1- 2013 305 178
- US-A1- 2015 160 856
- US-B1- 9 046 920

## Description

### TECHNICAL FIELD

Embodiments of the present invention relate to information input technologies, and in particular, to a character input method and apparatus, and a terminal.

### BACKGROUND

Currently, a smart device tends to become increasingly compact, resulting in a limited screen size of the smart device.

For existing screen-related input methods, such as a handwriting input method, a T9 input method, and a keyboard input method, the smart device needs to fully display a stroke manually input by a user, a T9 keypad, or a keyboard. However, due to the relatively small screen size of the compact smart device, a screen of the compact smart device may be not large enough to fully display the stroke manually input by the user, the T9 keypad, or the keyboard. Even if the screen of the compact smart device can fully display the stroke manually input by the user, the T9 keypad, or the keyboard, it is difficult for the user to actually perform a manual input operation because of the limited size. Therefore, at present, none of these input methods is applicable to the compact smart device.
US 9046920B1 discloses a solution for controlling navigation through a rotationally-dependent dataset within a graphical user interface of a three-dimensional data handling system by manipulating a physical analog input device.
US2013/305178A1 disclose an input control unit, which includes: a keyboard display unit for displaying characters that can be input on a screen; an input receiving unit for receiving a selection of a character from a user; an input character string acquiring unit for acquiring the selected character and adding the selected character to an input character string; a conversion candidate acquiring unit for acquiring conversion candidate character strings, which are conversions of a character string including the input character string; and a conversion candidate display unit for arranging and displaying the conversion candidate character strings in a row or column and receiving a user's selection. In a case where the conversion candidate character strings do not fit within the row or column, the conversion candidate display unit causes the conversion candidate character strings to scroll within the row or column upon receiving a flick operation.
EP0930760A2 discloses a communication terminal with display means, navigation means for navigating through information candidates, selection means for selecting one of the candidates, and a processor controlling the display means in accordance with the operation of the navigation means and the selection means. The display means comprises a first display part for displaying a string of entered information, and a second display part for displaying a string of a plurality of possible information candidates. One of the candidates in the second display part is highlighted by the cursor controlled by the navigation means. The processor copies the highlighted candidate from the candidate string into the entered information string upon selection by the selection means
US 2015/160856 A1 discloses a character input method on a smart watch having a touch screen.

### SUMMARY

Embodiments of the present invention relate to a character input method and apparatus as described in claims 1 and 9.

According to a first aspect, an embodiment of the present invention provides a character input method according to claim 1.

In addition, for voice input applicable to the compact smart device, an application scenario is limited. For example, in a noisy environment, voice input is difficult for the compact smart device to recognize, and features low voice input accuracy. However, an application scenario of the character input method in this embodiment of the present invention is not limited, and character input has relatively high accuracy.

In a first possible implementation of the first aspect, when the character input method is applied to Chinese character and/or word input, the method may further include: displaying an associated character of the first character in a third area of the display screen of the terminal; and when an operation instruction that the user selects the associated character is received, updating the first character in the character input box to the associated character selected by the user.

In a second possible implementation of the first aspect, after the operation instruction that the user selects the candidate character in the selection box is received, the character input method may further include: displaying, in the candidate character box, a character that can form a pinyin or a word with the first character; or when there is no character that can form a pinyin or a word with the first character, displaying a punctuation mark in the candidate character box. In this way, during a character input process, candidate characters that need to be displayed in the candidate character box gradually reduce.

In a third possible implementation of the first aspect, before the displaying an associated character of the first character in a third area of the display screen of the terminal, the character input method may further include: determining the associated character of the first character in a pre-stored character database according to the first character.

In a fourth possible implementation of the first aspect, the displaying an associated character of the first character in a third area of the display screen of the terminal may include: displaying the associated character of the first character in the third area of the display screen of the terminal according to a frequency of using the associated character of the first character by the user. This implementation is combined with an intelligent prediction function, to preferentially display an associated character, frequently used by the user, corresponding to an already-input character. This improves user experience.

In a fifth possible implementation of the first aspect, the character input method may further include: displaying a Chinese/English switch key in a fourth area of the display screen of the terminal, where the Chinese/English switch key is used to switch between Chinese and English. This implementation can facilitate switch between Chinese input and English input for the user.

In a sixth possible implementation of the first aspect, when the character input method is applied to dial pad input, candidate characters in the candidate character box are digits 0 to 9, and in this case, the character input method may further include: displaying a call key in a fifth area of the display screen of the terminal.

In a seventh possible implementation of the first aspect, when the character input method is applied to calculator input, candidate characters in the candidate character box may include digits and operational symbols.

In an eighth possible implementation of the first aspect, the character input method may further include: displaying an arrow key in a sixth area of the display screen of the terminal, where the arrow key is used to move a location of a cursor on the display screen of the terminal.

According to a second aspect, an embodiment of the present invention provides a character input apparatus according to claim 9.

In addition, for voice input applicable to the compact smart device, an application scenario is limited. For example, in a noisy environment, voice input is difficult for the compact smart device to recognize, and features low voice input accuracy. However, an application scenario of the character input apparatus in this embodiment of the present invention is not limited, and character input has relatively high accuracy.

In a first possible implementation of the second aspect, the character input apparatus may be applied to Chinese character and/or word input. In this case, the display module may be further configured to display an associated character of the first character in a third area of the display screen. The processing module may be further configured to receive an operation instruction that the user taps to select the associated character. The display module may be further configured to: when the processing module receives the operation instruction that the user taps to select the associated character, update the first character in the character input box to the associated character selected by the user.

In a second possible implementation of the second aspect, the display module may be further configured to: display, in the candidate character box, a character that can form a pinyin or a word with the first character; or when there is no character that can form a pinyin or a word with the first character, display a punctuation mark in the candidate character box. In this way, during a character input process, candidate characters that need to be displayed in the candidate character box gradually reduce.

In a third possible implementation of the second aspect, the display module may be further configured to: before displaying the associated character of the first character in the third area of the display screen, determine the associated character of the first character in a pre-stored character database according to the first character.

In a fourth possible implementation of the second aspect, the display module may be further configured to display the associated character of the first character in the third area of the display screen according to a frequency of using the associated character of the first character by the user. This implementation is combined with an intelligent prediction function, to preferentially display an associated character, frequently used by the user, corresponding to an already-input character. This improves user experience.

In a fifth possible implementation of the second aspect, the display module may be further configured to display a Chinese/English switch key in a fourth area of the display screen, where the Chinese/English switch key is used to switch between Chinese and English. This implementation can facilitate switch between Chinese input and English input for the user.

In a sixth possible implementation of the second aspect, the character input apparatus may be applied to dial pad input. In this case, candidate characters in the candidate character box are digits 0 to 9, and the display module may be further configured to display a call key in a fifth area of the display screen.

In a seventh possible implementation of the second aspect, the character input apparatus may be applied to calculator input. In this scenario, candidate characters in the candidate character box may include digits and operational symbols.

In an eighth possible implementation of the second aspect, the display module may be further configured to display an arrow key in a sixth area of the display screen, where the arrow key is used to move a location of a cursor on the display screen.

In addition, in any one of the foregoing implementations, there may be one or more candidate character boxes, all characters in a character set are included in the candidate character box, candidate characters that can be displayed in each candidate character box are non-repeated, and the character set may include any one or a combination of the following sets: an alphabet, initials, simple finals, punctuation marks, operational symbols, digits 0 to 9, or the like.

Further, the arrow key, the Chinese/English switch key, and the call key may all be present on the display screen of the terminal, or may be designed according to a requirement. For example, only one or two of them are included on the display screen of the terminal.

These aspects or another aspect of the present invention are more concise and easy to understand in the description of the following (multiple) embodiments.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1A is a schematic structural diagram of an appearance of a smart band;
FIG. 1B is a schematic structural diagram of an appearance of a smartwatch;
FIG. 2 is a schematic flowchart of Embodiment 1 of a character input method according to the present invention;
FIG. 3 to FIG. 12 are diagrams of examples of interfaces used during an implementation process of a character input method according to the present invention;
FIG. 13 is a schematic structural diagram of Embodiment 1 of a character input apparatus according to the present invention; and
FIG. 14 is a schematic structural diagram of Embodiment 1 of a terminal according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

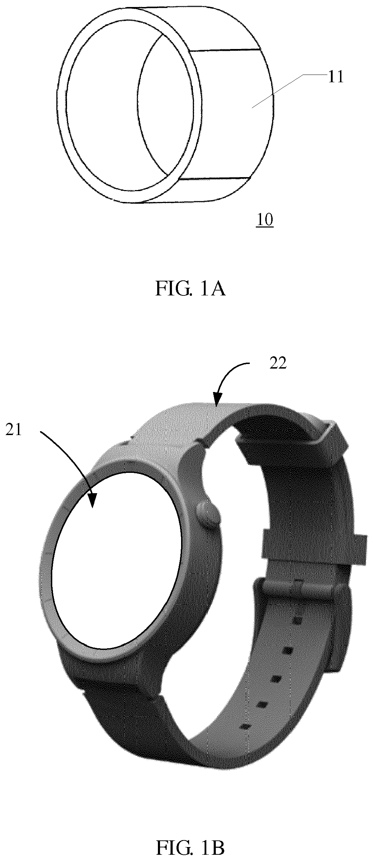

A current smart band and a current smartwatch are generally in a ring form, and a curved screen or flat screen is disposed on the smart band and the smartwatch. For example, FIG. 1A is a schematic structural diagram of an appearance of a smart band. Referring to FIG. 1A, a smart band 10 is in a closed ring form, but this embodiment of the present invention is not limited thereto. That is, the smart band may also be in a non-closed ring form. For a specific structure, reference may be made to forms of various smart bands or bracelets in the prior art. A curved screen 11 is disposed on the smart band 10. For another example, FIG. 1B is a schematic structural diagram of an appearance of a smartwatch. Referring to FIG. 1B, the smartwatch includes a circular screen 21 and a watch band 22.

Due to a limited width of a smart band/a smartwatch, a screen of the smart band/the smartwatch is quite small, so that a function of the smart band/the smartwatch is approximate to that of a smartphone, but the screen of the smart band/the smartwatch is smaller than that of the smartphone, bringing a user inconvenience in inputting information on the smart band/the smartwatch.

Based on the foregoing problem, the embodiments of the present invention provide a character input method and apparatus, and a terminal, so as to implement information input on a compact smart device, such as a smart band or a smartwatch. In addition, compared with a voice input method, in the embodiments of the present invention, an application scenario is not limited, and character input has relatively high accuracy.

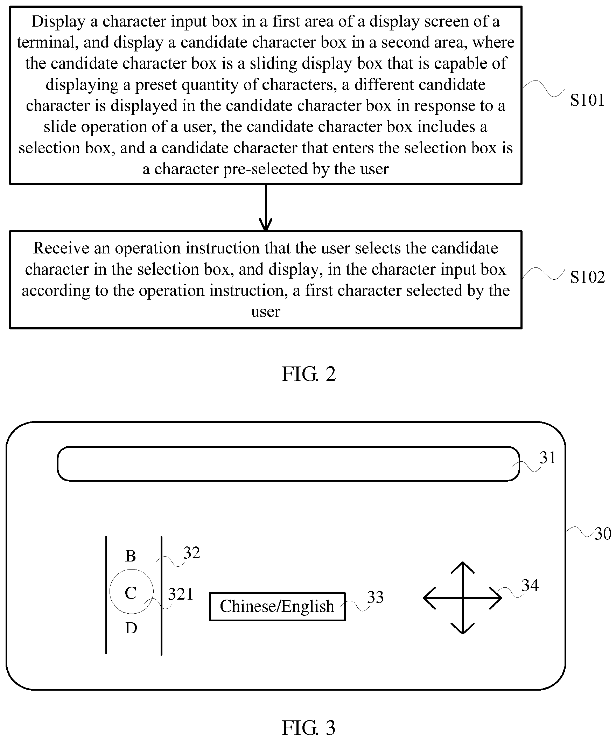

FIG. 2 is a schematic flowchart of Embodiment 1 of a character input method according to the present invention. An embodiment of the present invention provides a character input method, and the method may be executed by a character input apparatus. The apparatus may be implemented by hardware and/or software. The apparatus is integrated into a smart band or a smartwatch, or the apparatus may, according to embodiments not covered by the claims, be integrated into, for example, a device such as a tablet computer, a personal digital assistant (Personal Digital Assistant, PDA for short), and a desktop computer. In this embodiment, an example in which the method is executed by the smart band is used for description. As shown in FIG. 2, the method includes the following steps.

S101. Display a character input box in a first area of a display screen of a terminal, and display a candidate character box in a second area, where the candidate character box is a sliding display box that is capable of displaying a preset quantity of characters, a different candidate character is displayed in the candidate character box in response to a slide operation of a user, the candidate character box includes a selection box, and a candidate character that enters the selection box is a character pre-selected by the user.

Referring to FIG. 3, a character input box 31 and a candidate character box 32 are displayed on a screen display screen 30 of the smart band. The candidate character box 32 includes a selection box 321. The user may slide up/down the candidate character box 32 to implement display of different candidate characters in the candidate character box 32. Herein, for example, a candidate character that enters the selection box 321 is a character "C", that is, a character pre-selected by the user. Characters "B" and "D" are characters that are to be displayed when the candidate character box 32 is slid up and down. In addition, the candidate character box 32 may be set to a form of displaying various candidate characters in response to a slide left/right operation or another slide operation, and details are not described herein. The character pre-selected by the user is a character that is input into the selection box by the user and that waits for selection confirmation. After the terminal receives a selection confirmation instruction of the user, the character pre-selected by the user is selected by the selection box 321 in the candidate character box 32 and enters the character input box 31.

It should be noted that, specific locations of the first area and the second area are not limited to examples shown in FIG. 3, provided that the character input box and the candidate character box can be differentiated on the display screen of the terminal. When the screen of the terminal is relatively large, two or more characters may also be simultaneously displayed in the candidate character box. That is, the preset quantity of characters in this embodiment of the present invention is set according to a screen size of the terminal.

S102. Receive an operation instruction that the user selects the candidate character in the selection box, and display, in the character input box according to the operation instruction, a first character selected by the user.

The operation instruction that the user selects the candidate character in the selection box may be specifically an instruction that is triggered when a time for which the candidate character stays in the selection box exceeds a preset time after the candidate character enters the selection box in response to a slide operation of the user.

Examples of other implementations are not further described one by one in this embodiment of the present invention.

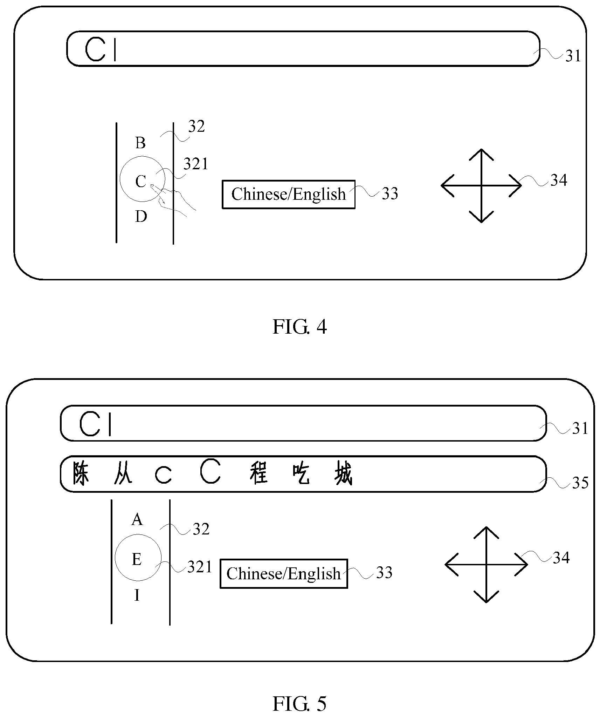

For example, referring to FIG. 4, the user wants to input a character "C", so the user slides the candidate character box 32 to make the character "C" enter the selection box 321, and taps the character "C" in the selection box 321. Correspondingly, after receiving an operation instruction that the user selects a candidate character by tapping the selection box 321, the smart band displays, according to the operation instruction, in the character input box 31, the first character selected by the user, that is, the character "C". A vertical line on the right of the character "C" in the character input box 31 is a cursor.

In this embodiment, the character input box in the first area of the display screen of the terminal is displayed, and the candidate character box in the second area is displayed, where the candidate character box is a sliding display box that is capable of displaying the preset quantity of characters, a different candidate character is displayed in the candidate character box in response to a slide operation of the user, the candidate character box includes the selection box, and the candidate character that enters the selection box is the character selected by the user. The operation instruction that the user selects the candidate character in the selection box is received, and the first character selected by the user is displayed in the character input box according to the operation instruction. This implements information input on a smart band, not limited by a screen size of the terminal.

In addition, for voice input applicable to the compact smart device, an application scenario is limited. For example, in a noisy environment, voice input is difficult for the compact smart device to recognize, and features low voice input accuracy. However, in this embodiment of the present invention, an application scenario is not limited, and character input has relatively high accuracy.

Especially, for the compact smart device, the candidate character box in this embodiment of the present invention is a sliding display box that is capable of displaying the preset quantity of characters (the preset quantity of characters herein may be, for example, one), and a different candidate character is displayed in the candidate character box in response to a slide operation of the user. Therefore, the screen size required in this input method is substantially reduced, and accurate character input can be implemented, not limited by a screen size of the compact smart device. This improves user experience.

The following separately describes the character input method in several different scenarios.

In one scenario, the character input method is applied to text input. The text input may include Chinese character input and word input.

In this case, the character input method may further include: displaying an associated character of the first character in a third area of the display screen of the terminal; and when an operation instruction that the user selects the associated character is received, updating the first character in the character input box to the associated character selected by the user.

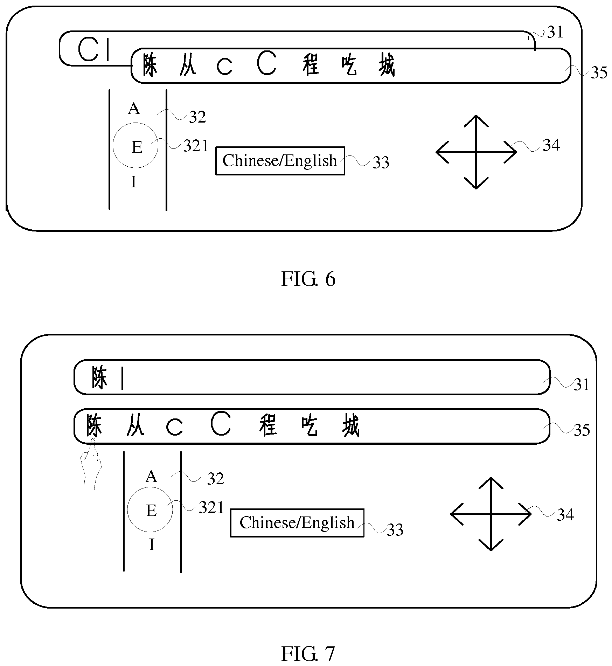

Specifically, referring to FIG. 5, when the user inputs the character "C" into the character input box 31, the smartwatch displays the associated character of the first character in a third area 35, other than the first area and the second area, on the display screen of the terminal. " 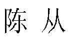 c C 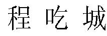 " are examples of the associated character, and are merely used as examples for description herein. This embodiment of the present invention is not limited thereto. In addition, referring to FIG. 6, when the user inputs the character "C" into the character input box 31, the smartwatch displays the associated character " 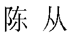 c C 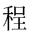 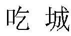 " of the first character in a third area overlapping the first area and not covering an already-input character.

It should be noted that relative locations of the first area and the third area on the display screen of the terminal are not limited in this embodiment of the present invention. The first area and the third area may overlap, or may be independent of each other, provided that displaying characters that are included in the first area and the third area is not affected. For example, referring to FIG. 5 and FIG. 6, the character input box 31 and the third area 35 are independent of each other in FIG. 5, and the character input box 31 overlaps the third area 35 in FIG. 6.

In addition, it should be noted that, when there are relatively many associated characters, the associated characters cannot be simultaneously displayed on the display screen of the terminal. In this case, a virtual key used to page up/down may be displayed at the rightmost of an associated character box, so that all the associated characters can be displayed. For details, reference may be made to an existing character input method. Details are not repeated herein.

Further, referring to FIG. 7, when receiving an operation instruction that the user selects the associated character, the smartwatch updates the first character in the character input box 31 to the associated character selected by the user. Herein, for example, the associated character selected by the user is " 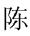 ".

On a basis of the foregoing embodiment, after the operation instruction that the user selects the candidate character in the selection box is received, the character input method may further include: displaying, in the candidate character box, a character that can form a pinyin or a word with the first character; or when there is no character that can form a pinyin or a word with the first character, displaying a punctuation mark in the candidate character box. During a character input process, it can be implemented in this embodiment that candidate characters that need to be displayed in the candidate character box decreases gradually. Herein, a decrease in the candidate characters does not mean a decrease in a quantity of candidate characters that are supposed to be displayed in the candidate character box on the display screen, but means a gradual decrease in a total quantity of to-be-selected candidate characters that can be displayed in the candidate character box.

For example, after an initial is input, a character range that can be scrolled for display in the candidate character box is reduced to finals corresponding to the initial. After a final is input, a punctuation mark is displayed. Referring to FIG. 5, FIG. 6, and FIG. 7, after the user inputs the character "C" into the character input box 31, the smartwatch displays, in the candidate character box 32, characters that can form a pinyin with the input character "C", including characters "A", "E", "I", and the like. The character "C" is an initial, and the characters "A", "E", "I", and the like are finals that can form a pinyin with the character "C".

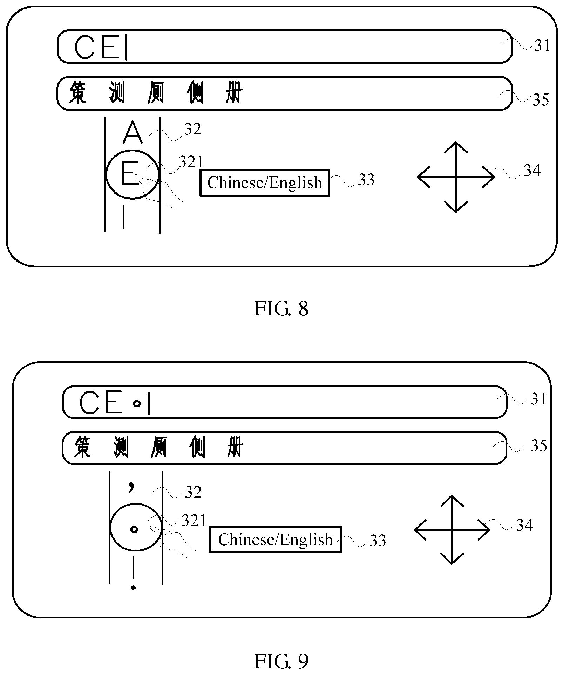

As shown in FIG. 8, the user taps the character "E" in the selection box 321, and the already-input character "C" and character "E" form a pinyin "CE" in the character input box 31. In this case, associated characters " 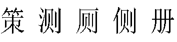 " are displayed. In addition, referring to FIG. 9, the smartwatch displays a punctuation mark in the candidate character box 32, and the punctuation mark includes ", ", " 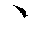 ", "∘ ", "! ", or the like.

Further, before the displaying an associated character of the first character in a third area of the display screen of the terminal, the character input method may further include: determining the associated character of the first character in a pre-stored character database according to the first character.

Optionally, the displaying an associated character of the first character in a third area of the display screen of the terminal may include: displaying the associated character of the first character in the third area of the display screen of the terminal according to a frequency of using the associated character of the first character by the user. An intelligent association function is combined in this embodiment, to preferentially display an associated character, frequently used by the user, corresponding to an already-input character. This improves user experience.

In an implementation of this embodiment of the present invention, when the character input method is used for text input, the character input method may further include: displaying, in a fourth area of the display screen of the terminal, a Chinese/English switch key, for example, a part denoted by a reference numeral "33" in FIG. 3 to FIG. 9. The Chinese/English switch key is used to switch between Chinese and English, so as to facilitate switch between Chinese input and English input for the user.

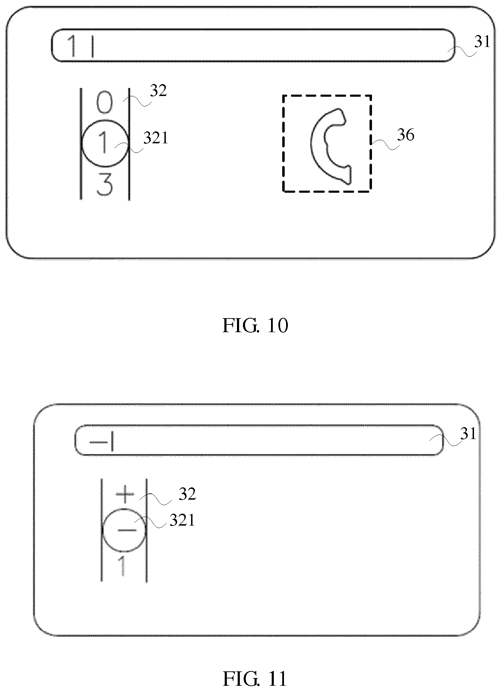

In another scenario, the character input method is applied to dial pad input. In this case, candidate characters in the candidate character box are digits 0 to 9, and the character input method may further include: display a call key in a fifth area of the display screen of the terminal. Specifically, referring to FIG. 10, the candidate character in the candidate character box 32 is digits 0 to 9, and a part inside a dashed-line box 36 is the call key, or the call key may be in another form.

In still another scenario, the character input method is applied to calculator input. In this scenario, as shown in FIG. 11, candidate characters in the candidate character box 32 include digits and operational symbols. Specifically, to obtain a computation result, the user merely needs to input a formula into the character input box 31.

In the foregoing embodiment, the character input method may further include: displaying an arrow key in a sixth area of the display screen of the terminal, where the arrow key is used to move a location of a cursor on the display screen of the terminal. Specifically, reference may be made to a part denoted by a reference numeral "34" in FIG. 3 to FIG. 9. For example, the cursor is moved left/right and/or up/down among already-input characters in the character input box; when at least two characters are simultaneously displayed in the candidate character box, the cursor is moved up/down among candidate characters in the candidate character box; and so on.

Optionally, in any one of the foregoing embodiments, a quantity of candidate character boxes may be one or more. The quantity of candidate character boxes may be specifically determined according to the screen size of the terminal. All characters in a character set are included in the foregoing quantity of candidate character boxes, candidate characters that can be displayed in each candidate character box are non-repeated, and the character set may include any one or a combination of the following sets: an alphabet, initials, simple finals, punctuation marks, operational symbols, digits 0 to 9, or the like.

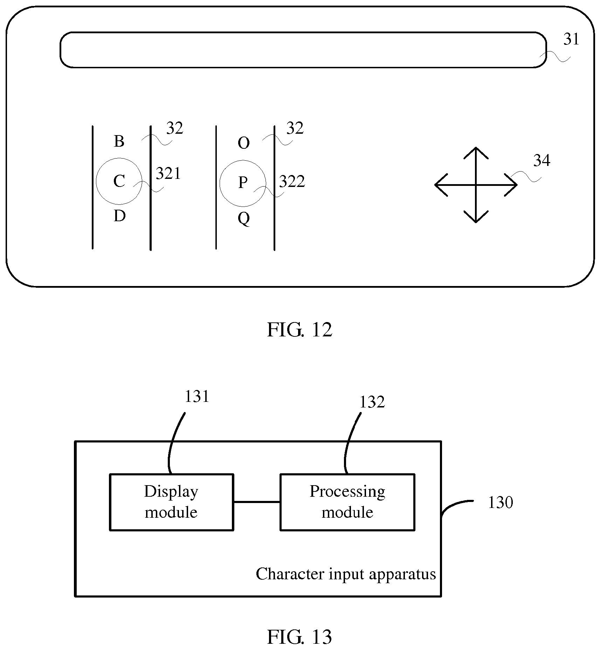

Referring to FIG. 12, in an optional implementation of the present invention, the quantity of candidate character boxes may be adjusted according to a display status of the display screen. For example, the quantity of candidate character boxes 32 may also be two, three, or more. An example in which the character set is an alphabet and there are two candidate character boxes 32 is used for description. Characters that may be displayed in the candidate character box 32 on a left side include one or more of 14 candidate characters A to N in an alphabet, and the candidate character that enters the selection box 321 is a character "C". One or more of 12 candidate characters O to Z in the alphabet may be displayed in the candidate character box 32 on a right side, and the candidate character that enters the selection box 322 is a character "P". Herein, the characters that may be displayed in the candidate character boxes on the left side and on the right side are merely examples for description. There may be multiple specific implementations, and this is not limited in the present invention. A quantity of candidate characters simultaneously displayed in the candidate character box each time is preset by a system of the terminal or preset by the user. As shown in FIG. 12, a preset quantity of candidate characters simultaneously displayed in each candidate character box is three. Displaying different candidate characters in the candidate character box 32 and changing a candidate character that enters the selection box 321 and/or a selection box 322 can be implemented by sliding up/down the candidate character box 32 by the user. Optionally, the user may change the character displayed in the candidate character box and the pre-selected character in the selection box by using the arrow key 34. It can be understood that, when there are more than one candidate character box on the display screen, content that can be displayed in each candidate box may be preset by the system or may be preset by the user. This is not limited in this embodiment of the present invention.

Correspondingly, in a text input scenario, after the compact smart device, for example the smart band, receives the operation instruction that the user selects the candidate character in the selection box, the smart band displays, in the character input box 3 according to the operation instruction, the first character selected by the user, and displays, in the candidate character box 32, a character that can form a pinyin or a word with the first character; or when there is no character that can form a pinyin or a word with the first character, displays a punctuation mark in the candidate character box 32.

In FIG. 12, the arrow key 34 may control the cursor to move up/down in the candidate character box 32 or move left/ right in the candidate character box 32, or may control the cursor to move to the character input box 31.

It should be also noted that the candidate character box is not empty, and the quantity of candidate characters included in each candidate character box may be the same or different.

In addition, in a scenario in which there are multiple candidate character boxes, and the character set includes initials, simple finals, and punctuation marks, the punctuation marks may be separately included in one of the candidate character boxes, or the punctuation marks may be distributed to different candidate character boxes. This is not limited in this embodiment of the present invention.

Further, the arrow key, the Chinese/English switch key, and the call key may all be present on the display screen of the terminal, or may be designed according to a requirement. For example, only one or two of them are included on the display screen of the terminal. This is not limited in this embodiment of the present invention.

FIG. 13 is a schematic structural diagram of Embodiment 1 of a character input apparatus according to the present invention. As shown in FIG. 13, the character input apparatus 130 includes a display module 131 and a processing module 132.

The display module 131 is configured to: display a character input box in a first area of a display screen, and display a candidate character box in a second area, where the candidate character box is a sliding display box that is capable of displaying a preset quantity of characters, a different candidate character is displayed in the candidate character box in response to a slide operation of a user, the candidate character box includes a selection box, and a candidate character that enters the selection box is a character pre-selected by the user. The processing module 132 is configured to receive an operation instruction that the user selects the candidate character in the selection box. The display module 131 is further configured to display, in the character input box according to the operation instruction, a first character selected by the user.

The apparatus in this embodiment may be configured to execute the technical solution in any one of the foregoing method embodiments, and implementation principles and technical effects of the apparatus are similar to those of the method embodiments. Details are not repeated herein.

In one scenario, the character input apparatus may be applied to Chinese character and/or word input. In this case, the display module 131 may be further configured to display an associated character of the first character in a third area of the display screen. The processing module 132 may be further configured to receive an operation instruction that the user taps to select the associated character. The display module 131 may be further configured to: when the processing module receives the operation instruction that the user taps to select the associated character, update the first character in the character input box to the associated character selected by the user.

Optionally, the display module 131 may be further configured to: display, in the candidate character box, a character that can form a pinyin or a word with the first character; or when there is no character that can form a pinyin or a word with the first character, display a punctuation mark in the candidate character box. In this way, during a character input process, candidate characters that need to be displayed in the candidate character box gradually reduce.

Further, the display module 131 may be further configured to: before displaying the associated character of the first character in the third area of the display screen, determine the associated character of the first character in a pre-stored character database according to the first character.

Furthermore, the display module 131 may be further configured to: display the associated character of the first character in the third area of the display screen according to a frequency of using the associated character of the first character by the user. This implementation is combined with an intelligent prediction function, to preferentially display an associated character, frequently used by the user, corresponding to an already-input character. This improves user experience.

In addition, in this scenario, the display module 131 may be further configured to display a Chinese/English switch key in a fourth area of the display screen, where the Chinese/English switch key is used to switch between Chinese and English. This implementation can facilitate switch between Chinese input and English input for the user.

In another scenario, the character input apparatus may be applied to dial pad input. In this case, candidate characters in the candidate character box are digits 0 to 9, and the display module may be further configured to display a call key in a fifth area of the display screen.

In still another scenario, the character input apparatus may be applied to calculator input. In this case, candidate characters in the candidate character box may include digits and operational symbols.

Based on any one of the foregoing embodiments, the display module 131 may be further configured to display an arrow key in a sixth area of the display screen, where the arrow key is used to move a location of a cursor on the display screen.

There may be one or more candidate character boxes, all characters in a character set are included in the candidate character box, candidate characters that can be displayed in each candidate character box are non-repeated, and the character set may include any one or a combination of the following sets: an alphabet, initials, simple finals, punctuation marks, operational symbols, digits 0 to 9, or the like.

It should be further noted that the function of the display module 131 may be specifically implemented by controlling the display screen by a processor of the apparatus, and the function of the processing module 132 may be specifically implemented by the processor of the apparatus or by the processor and another control circuit.

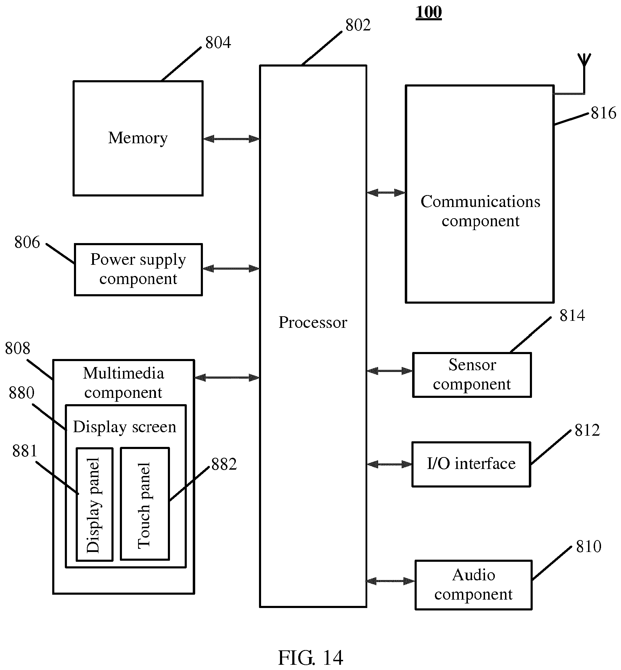

FIG. 14 is a schematic structural diagram of Embodiment 1 of a terminal according to the present invention. Referring to FIG. 14, the terminal 100 may include one or more of the following components: a processor 802, a memory 804, a power supply component 806, a multimedia component 808, an audio component 810, an input/output (input/output, I/O for short) interface 812, a sensor component 814, or a communications component 816. It can be understood by a person skilled in the art that the terminal structure shown in FIG. 14 does not constitute a limitation on the terminal, and the terminal may include more or fewer components than those shown in the figure, or some components may be combined, or some components may be separated, or the components may be disposed in different manners.

The processor 802 is a control center of the terminal 100, and is configured to: connect various parts of the entire terminal by using various interfaces or lines, and perform various functions of the terminal 100 and data processing by running or executing a software program and/or module stored in the memory 804 and invoking data stored in the memory 804, so as to perform overall monitoring on the terminal. Optionally, the processor 802 may include one or more processing units. Preferably, an application processor and a modem processor may be integrated into the processor 802. The application processor mainly processes an operating system, a user interface, an application program, and the like, and the modem processor mainly processes wireless communication. It can be understood that the modem processor may alternatively not be integrated into the processor 802.

The memory 804 is configured to store data of various types to support an operation performed by the terminal 100. Examples of the data include any application program used to be operated on the terminal 100, a method instruction, a pinyin, a character database picture, a video, and the like. The memory 804 may be implemented by any type of volatile or non-volatile storage device or by a combination thereof, for example, a static random access memory (Static Random Access Memory, SRAM for short), an electrically erasable programmable read-only memory (Electrically Erasable Programmable Read-Only Memory, EEPROM for short), an erasable programmable read-only memory (Erasable Programmable Read Only Memory, EPROM for short), a programmable read-only memory (Programmable Red-Only Memory, PROM for short), a read-only memory (Read-Only Memory, ROM for short), a magnetic memory, a flash memory, a magnetic disk, or an optical disc.

The power supply component 806 supplies power to various components of the terminal 100. The power supply component 806 may include a power supply management system, one or more power supplies, and another related component that generates, manages, and distributes power for the terminal 100.

The multimedia component 808 includes a screen that provides an output interface between the terminal 100 and a user. In some embodiments, the screen may be implemented as a display screen 880. The display screen 880 may be configured to display information input by the user or information provided to the user and various menus of the terminal 100, and may also receive use input. Specifically, the display screen 880 may include a display panel 881 and a touch panel (Touch Panel, TP for short) 882. The display panel 881 may be configured in a form of a liquid crystal display (Liquid Crystal Display, LCD for short), an organic light-emitting diode (Organic Light-Emitting Diode, OLED for short), or the like. The touch panel 882 is also referred to as a touchscreen, a touch-sensitive screen, or the like, and may collect a touch operation or a non-touch operation (such as an operation performed by the user on the touch panel 882 or near the touch panel 882 by using a finger, a stylus, or any another suitable object or accessory, or a somatosensory operation that includes operation types such as a single-point control operation and a multi-point control operation) of the user on or near the touch panel 882, and drive a corresponding connected apparatus according to a preset program. Optionally, the touch panel 882 may include two parts, a touch detection apparatus and a touch controller. The touch detection apparatus detects an orientation and a posture of a touch performed by the user, and detects a signal brought by a touch operation and sends the signal to the touch controller. The touch controller receives touch information from the touch detection apparatus, converts the touch information into information that can be processed by the processor, sends the information to the processor 802, and can receive and execute a command sent by the processor 802. In addition, the touch panel 882 may be implemented in various types, such as a resistive type, a capacitive type, an infrared type, and a surface acoustic wave type, or the touch panel 882 may be implemented by using any technology developed in the future. Further, the touch panel 882 may cover the display panel 881. The user may perform, according to content (the displayed content includes, but is not limited to, a soft keyboard, a virtual mouse, a virtual key, an icon, and the like) displayed on the display panel 881, an operation on or near the touch panel 882 that covers the display panel 881. After detecting the operation performed on or near the touch panel 882, the touch panel 882 sends the operation to the processor 802 to determine user input, and then the processor 802 provides corresponding visual output on the display panel 881 according to the user input. Although in FIG. 14, the touch panel 882 and the display panel 881 are used as two independent components to implement input and ouput functions of the terminal 100, in some embodiments, the touch panel 882 and the display panel 881 may be integrated to implement the input and output functions of the terminal 100. A person skilled in the art can understand that the display screen 880 is a user interface (UI, User Interface), and the terminal 100 may include more or fewer user interfaces than those shown in the figure.

In some optional embodiments, the multimedia component 808 may further include a front camera and/or a rear camera. When the terminal 100 is in an operation mode, such as a photographing mode or a video mode, the front camera and/or the rear camera may receive external multimedia data. Each front camera and rear camera may be a fixed optical lens system or has a focus length and an optical zoom capability.

The audio component 810 is configured to output and/or input an audio signal. For example, the audio component 810 includes a microphone (Microphone, MIC for short). When the terminal 100 is in an operation mode, such as a call mode, a recording mode, and a voice recognition mode, the microphone is configured to receive an external audio signal. The received audio signal may be further stored in the memory 804 or is sent by using the communications component 816. In some embodiments, the audio component 810 further includes a speaker, configured to output the audio signal.

The I/O interface 812 provides an interface between the processor 802 and a peripheral interface module. The peripheral interface module may be a click wheel, a button, and the like. The button may include, but is not limited to, a home button, a volume button, a start-up button, and a lock button.

The sensor component 814 includes one or more sensors, and is configured to provide evaluation of various statuses for the terminal 100. For example, the sensor component 814 may detect an on/off state of the terminal 100 and relative locations of components, where the components are, for example, a display and a mini keypad of the terminal 100. The sensor component 814 may further detect a location change of the terminal 100 or a component of the terminal 100, presence of a touch between the user and the terminal 100, an orientation or acceleration/deceleration of the terminal 100, and a temperature change of the terminal 100. The sensor component 814 may include a proximity sensor, configured to detect presence of an object nearby without any physical contact, or The sensor component 814 may include an optical sensor, for example, a complementary metal oxide semiconductor (Complementary Metal Oxide Semiconductor, CMOS for short) or charge-coupled device (Charge-coupled Device, CCD for short) image sensor, configured to be used in an imaging application. In some embodiments, the sensor component 814 may further include an acceleration sensor, a gyro sensor, a magnetic sensor, a pressure sensor, or a temperature sensor.

The communications component 816 is configured for wired or wireless communication between the terminal 100 and another device. The terminal 100 may access a wireless network based on a communications standard, for example, Wireless Fidelity (Wireless-Fidelity, WiFi for short), the 2nd generation mobile communication (the 2nd Generation Mobile Communication, 2G for short), the 3rd generation mobile communication (the 3rd Generation Mobile Communication, 3G for short), the 4th generation mobile communication (the 4th Generation Mobile Communication, 4G for short), or a future communications standard, such as the 5th Generation Mobile Communication (the 5th Generation Mobile Communication, 5G for short), or a combination thereof. In an example embodiment, the communications component 816 receives a broadcast signal or broadcast-related information from an external broadcast management system by using a broadcast channel. In an example embodiment, the communications component 816 further includes a Near Field Communication (Near Field Communication, NFC for short) module to facilitate short-range communication. For example, the NFC module may be implemented based on a radio frequency identification (Radio Frequency Identification, RFID for short) technology, an Infrared Data Association (Infrared Data Association, IrDA for short) technology, an ultra wideband (Ultra Wideband, UWB for short) technology, a Bluetooth (Bluetooth, BT for short), and another technology.

In an example embodiment not covered by the claims, the terminal 100 may be implemented by one or more application-specific integrated circuits (Application Specific Integrated Circuit, ASIC for short), a digital signal processor (Digital Signal Processor, DSP for short), a digital signal processing device (Digital Signal Processing Device, DSPD for short), a programmable logic device (Programmable Logic Device, PLD for short), a field programmable gate array (Field Programmable Gate Array, FPGA for short), a controller, a micro-controller, a microprocessor, or another electronic element, and is configured to perform the foregoing method.

In an example embodiment not covered by the claims, a non-transitory computer readable storage medium including an instruction is provided, for example, the memory 804 including an instruction. The instruction may be executed by the processor 802 of the terminal 100 to perform the foregoing method. For example, the non-transitory computer readable storage medium may be a ROM, a random access memory (Random Access Memory, RAM for short), a compact disc read-only memory (Compact Disc Read-Only Memory, CD-ROM for short), a tape, a floppy disk, an optical data storage device, and the like.

A non-transitory computer readable storage medium is provided. When an instruction in the storage medium is executed by the processor 802 of the terminal 100, the terminal 100 can execute the foregoing character input method.

Specifically, the processor 802 may be configured to invoke the instruction in the memory 804, so as to:
display a character input box in a first area of the display screen 880 of the terminal 100, and display a candidate character box in a second area, where the candidate character box is a sliding display box that is capable of displaying a preset quantity of characters, a different candidate character is displayed in the candidate character box in response to a slide operation of the user, the candidate character box includes a selection box, and a candidate character that enters the selection box is a character pre-selected by the user;
receive an operation instruction that the user selects the candidate character in the selection box; and
display, in the character input box according to the operation instruction, a first character selected by the user.

In an optional implementation, the processor is further configured to:
if the terminal 100 is applied to Chinese character and/or word input, display an associated character of the first character in a third area of the display screen of the terminal; and
when receiving an operation instruction that the user taps to select the associated character, update the first character in the character input box to the associated character selected by the user.

Optionally, if the terminal 100 is applied to Chinese character and/or word input, a character that can form a pinyin or a word with the first character is displayed in the candidate character box of the display screen 880; or when there is no character that can form a pinyin or a word with the first character, a punctuation mark is displayed in the candidate character box.

In an optional implementation, the processor is further configured to:
before the associated character of the first character is displayed in the third area of the display screen 880 of the terminal 100, determine the associated character of the first character in a pre-stored character database according to the first character.

It can be understood that the terminal 100 in this embodiment may be configured to perform the technical solution in any one of the foregoing method embodiments, and implementation principles and technical effects thereof are similar to those of the method embodiments. Details are not repeated herein.

In the several embodiments provided in this application, it should be understood that the disclosed device and method may be implemented in other manners. For example, the described device embodiments are merely examples. For example, the unit or module division is merely logical function division and may be other division in actual implementation. For example, multiple units or modules may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on multiple network units. Some or all the modules may be selected according to actual needs to achieve the objectives of the solutions of the embodiments.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the present invention.

## Claims

1. A character input method, implemented by a terminal, comprising:
displaying (S101) a character input box in a first area of a display screen of the terminal, wherein the character input box is oriented in a first direction, and the display screen comprises a touchscreen;
displaying the first character with a cursor at a right side of the first character in the character input box;
displaying a candidate character box in a second area of the display screen, wherein the candidate character box is oriented perpendicularly to the first direction, and the candidate character box is a sliding display box displaying a preset quantity of candidate characters, a different candidate character is displayed in the candidate character box in response to a slide operation of a user on the second area of the display screen, the candidate character box comprises a selection box, and a candidate character that enters the selection box in response to the slide operation of the user is a character pre-selected by the user, wherein the sliding operation of the user is performed on the candidate character box;
receiving (S102) an operation instruction that the user selects the candidate character in the selection box and is triggered when a time for which the candidate character stays in the selection box exceeds a preset time after the candidate character enters the selection box in response to the slide operation of the user; and
displaying (S102), in the character input box according to the operation instruction, the first character and the candidate character selected by the user;
wherein the terminal is a smart band or a smartwatch.

2. The character input method according to claim 1, wherein the preset quantity of candidate characters comprises only characters that can form a pinyin or a word with the first character, or
when there is no character that can form a pinyin or a word with the first character, displaying a punctuation mark in the candidate character box.

3. The character input method according to claim 2, wherein the method further comprises:
determining a character that can form a pinyin or a word with the first character using a pre-stored character database according to the first character.

4. The character input method according to any one of claims 2 to 3, further comprising:
displaying a Chinese/English switch key in a fourth area of the display screen of the terminal, wherein the Chinese/English switch key is used to switch between Chinese and English.

5. The character input method according to claim 1, wherein when the character input method is applied to dial pad input, candidate characters in the candidate character box are digits 0 to 9, and the method further comprises:
displaying a call key in a fifth area of the display screen of the terminal.

6. The character input method according to claim 1, wherein when the character input method is applied to calculator input, candidate characters in the candidate character box comprise digits and operational symbols.

7. The character input method according to any one of claims 1 to 6, further comprising:
displaying an arrow key in a sixth area of the display screen of the terminal, wherein the arrow key is used to move a location of the cursor on the display screen of the terminal.

8. The character input method according to any one of claims 1 to 7, wherein there are one or more candidate character boxes,
all characters in a character set are comprised in the one or more candidate character boxes, candidate characters that can be displayed in each candidate character box are non-repeated, and the character set comprises any one or a combination of the following sets:
an alphabet, initials, simple finals, punctuation marks, operational symbols, or digits 0 to 9.

9. A character input apparatus, comprising:
a display module (131) comprising a touch screen, the display module (131) configured to: display a character input box in a first area of a display screen of the character input apparatus, wherein the character input box is oriented in a first direction;
the display module (131), configured to display the first character with a cursor at a right side of the first character in the character input box;
and display a candidate character box in a second area of the display screen, wherein the candidate character box is oriented perpendicularly to the first direction, and the candidate character box is a sliding display box displaying a preset quantity of candidate characters, a different candidate character is displayed in the candidate character box in response to a slide operation of a user on the second area of the display screen, the candidate character box comprises a selection box, and a candidate character that enters the selection box in response to the slide operation of the user is a character pre-selected by the user, wherein the sliding operation of the user is performed on the candidate character box; and
a processing module (132), configured to receive an operation instruction that the user selects the candidate character in the selection box and is triggered when a time for which the candidate character stays in the selection box exceeds a preset time after the candidate character enters the selection box in response to the slide operation of the user;
the display module (131) is further configured to displaying, in the character input box according to the operation instruction, the first character and the candidate character selected by the user;
wherein the terminal is a smart band or a smartwatch.

10. The character input apparatus according to claim 9, wherein the preset quantity of candidate characters comprises only characters that can form a pinyin or a word with the first character, or when there is no character that can form a pinyin or a word with the first character, display a punctuation mark in the candidate character box.

## Patentansprüche

1. Zeicheneingabeverfahren, das durch ein Endgerät implementiert ist, das Folgendes umfasst:
Anzeigen (S101) eines Zeicheneingabefelds in einem ersten Bereich eines Anzeigebildschirms des Endgeräts, wobei das Zeicheneingabefeld in eine erste Richtung orientiert ist und der Anzeigebildschirm einen Berührungsbildschirm umfasst;
Anzeigen des ersten Zeichens mit einem Cursor an einer rechten Seite des ersten Zeichens in dem Zeicheneingabefeld;
Anzeigen eines Kandidatenzeichenfelds in einem zweiten Bereich des Anzeigebildschirms, wobei das Kandidatenzeichenfeld senkrecht zu der ersten Richtung orientiert ist und das Kandidatenzeichenfeld ein gleitendes Anzeigefeld ist, das eine zuvor eingestellte Anzahl von Kandidatenzeichen anzeigt, wobei ein anderes Kandidatenzeichen in dem Kandidatenzeichenfeld als Reaktion auf einen Gleitbetrieb eines Benutzers auf dem zweiten Bereich des Anzeigebildschirms angezeigt wird, das Kandidatenzeichenfeld ein Auswahlfeld umfasst und ein Kandidatenzeichen, das als Reaktion auf den Gleitbetrieb des Benutzer in das Auswahlfeld eintritt, ein Zeichen ist, das durch den Benutzer zuvor ausgewählt wird, wobei der Gleitbetrieb des Benutzers auf dem Kandidatenzeichenfeld durchgeführt wird;
Empfangen (S102) einer Betriebsanweisung, dass der Benutzer das Kandidatenzeichen in dem Auswahlfeld auswählt und ausgelöst wird, wenn eine Zeit, für die das Kandidatenzeichen in dem Auswahlfeld verbleibt, eine zuvor eingestellte Zeit überschreitet, nachdem das Kandidatenzeichen als Reaktion auf den Gleitbetrieb des Benutzers in das Auswahlfeld eintritt; und
Anzeigen (S102), in dem Zeicheneingabefeld gemäß der Betriebsanweisung, des ersten Zeichens und des Kandidatenzeichens, das durch den Benutzer ausgewählt wird;
wobei das Endgerät ein Smartband oder eine Smartwatch ist.

2. Zeicheneingabeverfahren nach Anspruch 1, wobei die zuvor eingestellte Anzahl von Kandidatenzeichen nur Zeichen umfasst, die mit dem ersten Zeichen ein Pinyin oder ein Wort ausbilden können, oder
wenn kein Zeichen vorhanden ist, das mit dem ersten Zeichen ein Pinyin oder ein Wort ausbilden kann, Anzeigen eines Satzzeichens in dem Kandidatenzeichenfeld.

3. Zeicheneingabeverfahren nach Anspruch 2, wobei das Verfahren ferner Folgendes umfasst:
Bestimmen eines Zeichens, das mit dem ersten Zeichen ein Pinyin oder ein Wort unter Verwendung einer zuvor gespeicherten Zeichendatenbank gemäß dem ersten Zeichen ausbilden kann.

4. Zeicheneingabeverfahren nach einem der Ansprüche 2 bis 3, das ferner Folgendes umfasst:
Anzeigen einer chinesisch/englischen Umschalttaste in einem vierten Bereich des Anzeigebildschirms des Endgeräts, wobei die chinesisch/englische Umschalttaste verwendet wird, um zwischen Chinesisch und Englisch umzuschalten.

5. Zeicheneingabeverfahren nach Anspruch 1, wobei, wenn das Zeicheneingabeverfahren auf eine Wähltastatureingabe angewendet wird, Kandidatenzeichen in dem Kandidatenzeichenfeld die Ziffern 0 bis 9 sind, und das Verfahren ferner Folgendes umfasst:
Anzeigen einer Anruftaste in einem fünften Bereich des Anzeigebildschirms des Endgeräts.

6. Zeicheneingabeverfahren nach Anspruch 1, wobei, wenn das Zeicheneingabeverfahren auf eine Rechnereingabe angewendet wird, Kandidatenzeichen in dem Kandidatenzeichenfeld Ziffern und Betriebssymbole umfassen.

7. Zeicheneingabeverfahren nach einem der Ansprüche 1 bis 6, das ferner Folgendes umfasst:
Anzeigen einer Pfeiltaste in einem sechsten Bereich des Anzeigebildschirms des Endgeräts, wobei die Pfeiltaste verwendet wird, um eine Position des Cursors auf dem Anzeigebildschirm des Endgeräts zu bewegen.

8. Zeicheneingabeverfahren nach einem der Ansprüche 1 bis 7, wobei es ein oder mehrere Kandidatenzeichenfelder gibt,
alle Zeichen in einem Zeichensatz in dem einen oder den mehreren Kandidatenzeichenfeldern enthalten sind, Kandidatenzeichen, die in jedem Kandidatenzeichenfeld angezeigt werden können, nicht wiederholt werden und der Zeichensatz einen beliebigen oder eine Kombination der folgenden Sätze umfasst: ein Alphabet, Anfangsbuchstaben, einfache Finale, Satzzeichen, Betriebssymbole oder die Ziffern 0 bis 9.

9. Zeicheneingabevorrichtung, die Folgendes umfasst:
ein Anzeigemodul (131), das einen Berührungsbildschirm umfasst, wobei das Anzeigemodul (131) konfiguriert ist, um: ein Zeicheneingabefeld in einem ersten Bereich eines Anzeigebildschirms der Zeicheneingabevorrichtung anzuzeigen, wobei das Zeicheneingabefeld in eine erste Richtung orientiert ist;
das Anzeigemodul (131), das konfiguriert ist, um das erste Zeichen mit einem Cursor an der rechten Seite des ersten Zeichens in dem Zeicheneingabefeld anzuzeigen;
und ein Kandidatenzeichenfeld in einem zweiten Bereich des Anzeigebildschirms anzuzeigen, wobei das Kandidatenzeichenfeld senkrecht zu der ersten Richtung orientiert ist und das Kandidatenzeichenfeld ein gleitendes Anzeigefeld ist, das eine zuvor eingestellte Anzahl von Kandidatenzeichen anzeigt, wobei ein anderes Kandidatenzeichen in dem Kandidatenzeichenfeld als Reaktion auf einen Gleitbetrieb eines Benutzers auf dem zweiten Bereich des Anzeigebildschirms angezeigt wird, das Kandidatenzeichenfeld ein Auswahlfeld umfasst und ein Kandidatenzeichen, das als Reaktion auf den Gleitbetrieb des Benutzer in das Auswahlfeld eintritt, ein Zeichen ist, das durch den Benutzer zuvor ausgewählt wird, wobei der Gleitbetrieb des Benutzers auf dem Kandidatenzeichenfeld durchgeführt wird; und
ein Verarbeitungsmodul (132), das konfiguriert ist, um eine Betriebsanweisung zu empfangen, dass der Benutzer das Kandidatenzeichen in dem Auswahlfeld auswählt und ausgelöst wird, wenn eine Zeit, für die das Kandidatenzeichen in dem Auswahlfeld verbleibt, eine zuvor eingestellte Zeit überschreitet, nachdem das Kandidatenzeichen als Reaktion auf den Gleitbetrieb des Benutzers in das Auswahlfeld eintritt;
das Anzeigemodul (131) ferner konfiguriert ist, um in dem Zeicheneingabefeld gemäß der Betriebsanweisung das erste Zeichen und das Kandidatenzeichen anzuzeigen, das durch den Benutzer ausgewählt wird;
wobei das Endgerät ein Smartband oder eine Smartwatch ist.

10. Zeicheneingabevorrichtung nach Anspruch 9, wobei die zuvor eingestellte Anzahl von Kandidatenzeichen nur Zeichen umfasst, die mit dem ersten Zeichen ein Pinyin oder ein Wort ausbilden können,
oder wenn kein Zeichen vorhanden ist, das mit dem ersten Zeichen ein Pinyin oder ein Wort ausbilden kann, Anzeigen eines Satzzeichens in dem Kandidatenzeichenfeld.

## Revendications

1. Procédé de saisie de caractères, mis en œuvre par un terminal, comprenant :
l'affichage (S101) d'une fenêtre de saisie de caractères dans une première zone d'un écran d'affichage du terminal, la fenêtre de saisie de caractères étant orientée dans une première direction, et l'écran d'affichage comprenant un écran tactile ;
l'affichage du premier caractère avec un curseur sur un côté droit du premier caractère dans la fenêtre de saisie de caractère ;
l'affichage d'une fenêtre de caractère candidat dans une deuxième zone de l'écran d'affichage, la fenêtre de caractère candidat étant orientée perpendiculairement à la première direction, et la fenêtre de caractère candidat est une fenêtre d'affichage glissante affichant une quantité prédéfinie de caractères candidats, un caractère candidat différent est affichée dans la fenêtre de caractère candidat en réponse à une opération de glissement d'un utilisateur sur la deuxième zone de l'écran d'affichage, la fenêtre de caractère candidat comprend une fenêtre de sélection, et un caractère candidat qui entre dans la fenêtre de sélection en réponse à l'opération de glissement de l'utilisateur est un caractère pré-sélectionné par l'utilisateur, l'opération de glissement de l'utilisateur étant effectuée sur la fenêtre de caractère candidat ;
la réception (S102) d'une instruction d'opération selon laquelle l'utilisateur sélectionne le caractère candidat dans la fenêtre de sélection et qui est déclenchée lorsqu'un temps pendant lequel le caractère candidat reste dans la fenêtre de sélection dépasse un temps prédéfini après que le caractère candidat est entré dans la fenêtre de sélection en réponse à l'opération de glissement de l'utilisateur ; et
l'affichage (S102), dans la fenêtre de saisie de caractère selon l'instruction d'opération, du premier caractère et du caractère candidat sélectionnés par l'utilisateur ;
le terminal étant un bracelet connecté ou une montre connectée.

2. Procédé de saisie de caractères selon la revendication 1, dans lequel la quantité prédéfinie de caractères candidats comprend uniquement des caractères qui peuvent former un pinyin ou un mot avec le premier caractère, ou
lorsqu'il n'y a pas de caractère pouvant former un pinyin ou un mot avec le premier caractère, l'affichage d'un signe de ponctuation dans la fenêtre de caractère candidat.

3. Procédé selon la revendication 2, dans lequel le procédé comprend en outre :
la détermination d'un caractère qui peut former un pinyin ou un mot avec un premier caractère utilisant une base de données de caractères préenregistrée selon le premier caractère.

4. Procédé selon l'une quelconque des revendications 2 à 3, comprenant en outre :
l'affichage d'une touche de commutation chinois/anglais dans une quatrième zone de l'écran d'affichage du terminal, la touche de commutation chinois/anglais étant utilisée pour basculer entre le chinois et l'anglais.

5. Procédé de saisie de caractères selon la revendication 1, dans lequel lorsque le procédé de saisie de caractères est appliqué à la saisie du pavé numérique, les caractères candidats dans la fenêtre de caractère candidat sont des chiffres de 0 à 9, et le procédé comprend en outre :
l'affichage d'une touche d'appel dans une cinquième zone de l'écran d'affichage du terminal.

6. Procédé de saisie de caractères selon la revendication 1, dans lequel lorsque le procédé de saisie de caractères est appliqué à la saisie de la calculatrice, les caractères candidats dans la fenêtre de caractère candidat comprennent des chiffres et des symboles opérationnels.

7. Procédé selon l'une quelconque des revendications 1 à 6, comprenant en outre :
l'affichage d'une touche flèche dans une sixième zone de l'écran d'affichage du terminal, la touche flèche étant utilisée pour déplacer un emplacement du curseur sur l'écran d'affichage du terminal.

8. Procédé de saisie de caractères selon l'une quelconque des revendications 1 à 7, dans lequel il y a une ou plusieurs fenêtres de caractères candidats,
tous les caractères d'un ensemble de caractères sont compris dans la ou les fenêtres de caractères candidats, les caractères candidats qui peuvent être affichés dans chaque fenêtres de caractère candidat ne sont pas répétés et l'ensemble de caractères comprend l'un quelconque ou une combinaison des ensembles suivants : un alphabet, des initiales, des finales simples, des signes de ponctuation, des symboles opérationnels ou des chiffres de 0 à 9.

9. Appareil de saisie de caractères, comprenant :
un module d'affichage (131) comprenant un écran tactile, le module d'affichage (131) étant configuré pour : afficher une fenêtre de saisie de caractère dans une première zone d'un écran d'affichage de l'appareil de saisie de caractère, la fenêtre de saisie de caractère étant orientée dans une première direction ;
le module d'affichage (131), configuré pour afficher le premier caractère avec un curseur sur un côté droit du premier caractère dans la fenêtre de saisie de caractère ;
et l'affichage d'une fenêtre de caractère candidat dans une deuxième zone de l'écran d'affichage, la fenêtre de caractère candidat étant orientée perpendiculairement à la première direction, et la fenêtre de caractère candidat étant une fenêtre d'affichage glissante affichant une quantité prédéfinie de caractères candidats, un caractère candidat différent est affiché dans la fenêtre de caractère candidat en réponse à une opération de glissement d'un utilisateur sur la deuxième zone de l'écran d'affichage, la fenêtre de caractère candidat comprend une fenêtre de sélection, et un caractère candidat qui entre dans la fenêtre de sélection en réponse à l'opération de glissement de l'utilisateur est un caractère pré-sélectionné par l'utilisateur, l'opération de glissement de l'utilisateur étant effectuée sur la fenêtre de caractère candidat ; et
un module de traitement (132), configuré pour recevoir une instruction d'opération selon laquelle l'utilisateur sélectionne le caractère candidat dans la fenêtre de sélection et qui est déclenché lorsqu'un temps pendant lequel le caractère candidat reste dans la fenêtre de sélection dépasse un temps prédéfini après que le caractère candidat est entré dans la fenêtre de sélection en réponse à l'opération de glissement de l'utilisateur ;
le module d'affichage (131) est en outre configuré pour afficher, dans la fenêtre dse saisie de caractère selon l'instruction d'opération, le premier caractère et le caractère candidat sélectionnés par l'utilisateur ;
le terminal étant un bracelet connecté ou une montre connectée.

10. Dispositif de saisie de caractères selon la revendication 9, dans lequel la quantité prédéfinie de caractères candidats comprend uniquement des caractères qui peuvent former un pinyin ou un mot avec le premier caractère,
ou quand il n'y a pas de caractère qui puisse former un pinyin
ou un mot avec le premier caractère, l'affichage d'un signe de ponctuation dans la fenêtre de caractère candidate.
